# EUROPÄISCHE PATENTANMELDUNG

(11) **EP 3 159 311 A1**
(43) Veröffentlichungstag der Anmeldung: **26.04.2017**
(21) Anmeldenummer: 15190845.6
(22) Anmeldetag: 21.10.2015
(51) Int. Cl.: C02F 1/44

(54) **VERFAHREN ZUM REINIGEN EINER MEMBRAN EINER FILTRATIONSANLAGE ZUR WASSERAUFBEREITUNG**

(71) Anmelder: ItN Nanovation AG, 66117 Saarbrücken (DE)
(72) Erfinder: Dr. KASCHEK, Martin, 66386 St. Ingbert (DE)
(74) Vertreter: BRP Renaud & Partner mbB Rechtsanwälte Patentanwälte Steuerberater

(57) **Zusammenfassung**

Die vorliegende Erfindung betrifft ein Verfahren zum Reinigen einer Membran (3), die zum Filtern von Wasser dient, zum Beispiel zur Aufbereitung von Trink- und/oder Brauchwasser, bei dem ein Reinigungsmittel (34) auf eine Oberfläche (33) der Membran (3) aufgebracht wird, wobei das Reinigungsmittel (34) eine wässrige Hypochloritlösung (39) aufweist, die mit einer Säure (40) aktiviert ist, derart, dass ihr pH-Wert kleiner 7 ist.

## Beschreibung

Die vorliegende Erfindung betrifft ein Verfahren zum Reinigen einer Membran, die zum Filtern von Wasser dient, zum Beispiel zur Aufbereitung von Trink- und/oder Brauchwasser. Die Erfindung betrifft außerdem ein Reinigungsmittel zum Reinigen einer solchen Membran sowie die Verwendung eines derartigen Reinigungsmittels. Schließlich betrifft die Erfindung eine Filtrationsanlage zum Aufbereiten von Trink- und/oder Brauchwasser, die mit wenigstens einer derartigen Membran ausgestattet ist.

Oberflächenwasser, zum Beispiel aus Flüssen oder Seen, enthält üblicherweise organische und anorganische Verunreinigungen und muss in der Regel gefiltert werden, um es als Trinkwasser oder als Brauchwasser verwenden zu können. Diese Filtration kann mit Hilfe unterschiedlicher Filtereinrichtungen durchgeführt werden. Als besonders effizient für die Abscheidung kleiner und kleinster organischer und anorganischer Verunreinigungen haben sich Membranen herausgestellt, die für Wasser durchlässig und für die abzutrennenden Verunreinigungen undurchlässig sind. Derartige Membranen bestehen üblicherweise aus einem porösen Festkörper, dessen Porosität so gewählt ist, dass sich die gewünschte Filtrationswirkung einstellt. Derartige Membranen können aus einem porösen Metall, aus einem porösen Kunststoff oder aus einer porösen Keramik hergestellt sein. Üblicherweise sind mehrere Membranen zu einem Membranblock zusammengefasst. Aus der DE 10 2008 036 920 A1 ist ein Beispiel für derartige keramische Membranen bekannt.

Die Membranen besitzen eine dem zu filternden Wasser ausgesetzte Oberfläche, durch die das Wasser in die Membran eindringen kann. Ferner besitzen sie eine reinseitige Oberfläche, an der das gefilterte Wasser austreten kann. In der Regel befindet sich die rohseitige Oberfläche an der Außenseite der Membran, während die reinseitige Oberfläche im Inneren der Membran ausgebildet ist und dort zum Beispiel Sammelkanäle begrenzt, durch die das gefilterte Wasser aus der Membran herausgeführt werden kann. Ein Beispiel für einen derartigen Membranaufbau zeigt wieder die vorstehend genannte DE 10 2008 036 920 A1.

Während der Filtration werden die störenden Verunreinigungen an der rohseitigen Oberfläche vom Wasser getrennt, wodurch sich die Verunreinigungen an der rohseitigen Oberfläche anlagern. Diese Anlagerungen führen ihrerseits zu einer Verunreinigung der Membran, was mit einer Zunahme des Durchströmungswiderstands der Membran einhergeht. Je größer der Volumenstrom an zu reinigendem Wasser, desto rascher erfolgt die Verunreinigung der Membran. Um in einer Wasseraufbereitungsanlage einen ausreichenden Volumenstrom an gefiltertem Wasser erzeugen zu können, muss also entsprechend viel Membranfläche bereitgestellt werden, also in der Regel eine vergleichsweise große Anzahl an Membranen verwendet werden, wodurch die Wasseraufbereitungsanlage vergleichsweise groß und teuer ist.

Die Membranen, die während ihres Betriebs ihrerseits durch die aus dem Wasser herausgefilterten Verunreinigungen verunreinigt werden, können jedoch regeneriert bzw. ihrerseits gereinigt werden. Grobe Verunreinigungen lassen sich dabei mechanisch entfernen, beispielsweise durch eine Rückspülung, durch eine Beaufschlagung mit Luftbläschen sowie mit Hilfe von Abstreifern und dergleichen. Kleinere, insbesondere mikroskopische, organische und anorganische Verunreinigungen müssen dagegen chemisch abgereinigt werden. Beim chemischen Abreinigen von organischen Verunreinigungen, wie z.B. Bakterien, Sporen, Mikroorganismen und dergleichen, wird gleichzeitig auch eine Desinfektion der Membran erreicht. Das Anlagern organischer Verunreinigungen wird häufig als "Biofouling" bezeichnet. Ebenfalls kann es an der Membran bzw. in der porösen Struktur der Membran zu anorganischen Anlagerungen kommen, die nicht wasserlöslich sind und ebenfalls chemisch entfernt werden müssen. Derartige Anlagerungen erhöhen den Durchströmungswiderstand der Membran und werden häufig als "Scaling" bezeichnet.

Zur Regeneration von Biofouling, also von organischen Anlagerungen können oxidative Reinigungsmittel zur Anwendung kommen, beispielsweise Hypochlorite. Durch oxidative Reinigung können langkettige organische Moleküle zersetzt, also zerkleinert werden, wodurch sich eine verbesserte Löslichkeit der kleineren organischen Moleküle in Wasser ergibt. Scaling dagegen, also die Bildung anorganischer Ablagerungen lässt sich mit einem sauren Reinigungsmittel, also mit einer Säure regenerieren. Hier kann beispielsweise Zitronensäure zur Anwendung kommen.

Die Verwendung von Hypochloriten zur Erzielung einer oxidativen Reinigung benötigt sehr viel Zeit, wenn das Hypochlorit in einer niedrigen Konzentration verwendet wird. Wird das Hypochlorit dagegen in einer hohen Konzentration verwendet, wird vergleichsweise viel Wirkstoff verbraucht, der zur Reinigung an sich nicht erforderlich ist. Hierdurch wird das Verfahren vergleichsweise teuer. Ferner kann die Verwendung von Hypochloriten in Verbindung mit anderen, nicht störenden Wasserinhaltsstoffen, wie zum Beispiel Kalziumcarbonat, zu Ausfällungen an der Membran führen, die das Scaling der Membran unterstützen. Dementsprechend folgt auf eine oxidative Reinigung mit einem Hypochlorit in der Regel eine saure Reinigung mit einer Säure. Dementsprechend ist eine konventionelle chemische Reinigung einer derartigen Membran vergleichsweise aufwändig und teuer. Gleichzeitig wird dadurch auch eine mit derartigen Membranen ausgestattete Wasseraufbereitungsanlage vergleichsweise teuer, insbesondere dann, wenn die Regeneration bzw. Reinigung der Membranen in den Filtrationsprozess integriert werden soll, so dass permanent gefiltertes Wasser geliefert werden kann.

Die vorliegende Erfindung beschäftigt sich mit dem Problem, für ein Verfahren zum Reinigen einer derartigen Membran bzw. für ein Reinigungsmittel zum Reinigen einer solchen Membran bzw. für eine Verwendung eines derartigen Reinigungsmittels bzw. für eine mit einer derartigen Membran ausgestattete Filtrationsanlage eine verbesserte Ausführungsform anzugeben, die sich insbesondere durch einen reduzierten Zeitbedarf und/oder durch reduzierte Reinigungskosten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Reinigungsmittel mit Hilfe einer sauren, wässrigen Hypochloritlösung zu bilden. Die angesäuerte wässrige Hypochloritlösung bildet dabei entweder das gesamte Reinigungsmittel oder zumindest einen wesentlichen Bestandteil des Reinigungsmittels. Die Erfindung nutzt hierbei die Erkenntnis, dass sich die auf Oxidation beruhende Reinigungswirkung der Hypochloritlösung durch Ansäuern der Hypochloritlösung, also durch die Zugabe einer Säure signifikant verbessern lässt. Es hat sich gezeigt, dass die mit Hilfe der Säure aktivierte Hypochloritlösung deutlich bessere Reinigungseffekte erzielt, als eine neutrale oder basische Hypochloritlösung. Dieser verbesserte Reinigungseffekt wird darauf zurückgeführt, dass das in Wasser gelöste Hypochlorit dissoziiert und in Wasser im Wesentlichen in drei unterschiedliche Dissoziationsformen, sogenannten "Dissoziaten" vorliegt, nämlich in Form von elementarem Chlor, in Form einer hypochlorigen Säure und in Form eines Hypochlorits. Das Verhältnis dieser Hypochloritdissoziate ist dabei vor allem vom pH-Wert und der Temperatur der wässrigen Lösung abhängig. Durch ein Ansäuern der wässrigen Hypochloritlösung vergrößern sich der Anteil an hypochloriger Säure sowie der Anteil an elementarem Chlor innerhalb der Hypochloritlösung. Im Hinblick auf die Desinfektionswirkung bzw. im Hinblick auf die oxidative Reinigungswirkung ist jedoch hypochlorige Säure bis zu hundert Mal wirksamer als Hypochlorit. Hierdurch verstärkt sich der Reinigungseffekt bei reduziertem pH-Wert. Insbesondere lässt sich durch Ansäuern der Hypochloritlösung ein gegenläufiger Effekt, der bei zunehmenden Temperaturen entsteht, in den bei einer Wasseraufbereitungsanlage typischerweise auftretenden Temperaturbereichen deutlich übersteuern.

Die erfindungsgemäß vorgeschlagene Aktivierung der wässrigen Hypochloritlösung, derart, dass der pH-Wert der Hypochloritlösung kleiner als 7 ist, führt somit zu einer effizienten Verbesserung der Reinigungswirkung. Dies hat außerdem zur Folge, dass insgesamt weniger Reinigungsmittel benötigt wird, während gleichzeitig die für die Reinigung benötigte Zeit reduziert wird. Die damit verbundenen Kosteneinsparungen liegen auf der Hand.

Für eine Wasseraufbereitungsanlage, deren Membranen mit Hilfe dieses Verfahrens gereinigt werden, bedeutet dies, dass größere Volumenströme durch die Membranen gefördert werden können, da die Regenerationszeiten für die Membranen mit Hilfe des hier vorgestellten Reinigungsverfahrens signifikant reduziert können. Untersuchungen haben gezeigt, dass bei gleichbleibender Förderleistung von gefiltertem Wasser die benötigte Membranfläche um mindestens 50 % reduziert werden kann. Umgekehrt bedeutet dies, dass bei einer bestehenden Wasseraufbereitungsanlage bei gleichbleibender Membranfläche die Förderleistung an gefiltertem Wasser um mehr als 100 % gesteigert werden kann.

Gemäß einer vorteilhaften Ausführungsform kann die Aktivierung der Hypochloritlösung mit der Säure unmittelbar an der Membran erfolgen. Das heißt, dass die Zugabe der Säure zur Hypochloritlösung erst an der Membran erfolgt. Mit anderen Worten, die noch nicht angesäuerte und somit konventionelle oder weniger aktive Hypochloritlösung wird zunächst auf die Oberfläche der Membran aufgebracht und erst im aufgebrachten Zustand durch Zugabe der Säure aktiviert. Hierdurch wird erreicht, dass die pH-Wert-Verschiebung erst unmittelbar an der Membran erfolgt, so dass auch erst unmittelbar an der Membran die sehr aggressiven Dissoziate der Hypochloritlösung entstehen. Insbesondere soll dadurch auch ein Ausgasen von elementarem Chlor aus der wässrigen Lösung vermieden werden, dessen Anteil in der Hypochloritlösung durch deren Ansäuerung ebenfalls zunimmt.

Die wässrige Hypochloritlösung kann grundsätzlich gesättigt vorliegen. Bevorzugt ist die Hypochloritlösung jedoch ungesättigt. Das heißt, die Hypochloritlösung wird in einer ungesättigten Konzentration verwendet. Diese ungesättigte Konzentration kann gemäß einer vorteilhaften Ausführungsform gegenüber einer gesättigten Konzentration um weniger als das Hundertfache und vorzugsweise um weniger als das Fünfzigfache und insbesondere um weniger als das Fünfundzwanzigfache verdünnt sein. Das heißt, es liegen Verdünnungen von weniger als 1:100 bzw. weniger als 1:50 bzw. weniger als 1:25 vor. Weiterhin ist bevorzugt eine Verdünnung um mindestens das Zehnfache, also eine Verdünnung von mindestens 1:10. Durch das Maß der Verdünnung werden einerseits die Effizienz der Reinigung und andererseits die Kosten der Reinigung bestimmt. Je höher die Konzentration, desto höher die Effizienz und desto höher auch die Kosten. Als besonders effizient hat sich eine zwanzigfache Verdünnung der Hypochloritlösung gegenüber der gesättigten Hypochloritlösung erwiesen, also eine Verdünnung von etwa 1:20, wodurch sich ein besonders günstiger Kompromiss zwischen Effizienz und Kosten ergibt.

Bei einer anderen Ausführungsform kann vorgesehen sein, dass die Hypochloritlösung mindestens soweit angesäuert wird, dass die aktivierte Hypochloritlösung mindestens 1 Gramm, vorzugsweise mindestens 3 Gramm und insbesondere mindestens 5 Gramm elementares Chlor pro Liter Wasser aufweist. Des Weiteren kann vorgesehen sein, dass die Hypochloritlösung maximal soweit angesäuert wird, dass die aktivierte Hypochloritlösung maximal 7 Gramm und vorzugsweise maximal 6,5 oder 6,3 Gramm elementares Chlor pro Liter Wasser enthält. Diese Randbedingungen beruhen auf der Überlegung, dass der Anteil an elementarem Chlor in der wässrigen Lösung möglichst hoch sein soll, um die effiziente reinigende Wirkung des elementaren Chlors zu nutzen. Andererseits darf die Löslichkeitsgrenze von elementarem Chlor in Wasser nicht überschritten werden, um ein Ausgasen von elementarem Chlor zu vermeiden, da Chlorgas hochgradig gesundheitsgefährdend ist. Unter den üblicherweise bei einer Wasseraufbereitungsanlage auftretenden Standardbedingungen (Umgebungsdruck und Umgebungstemperatur) liegt die Löslichkeit von elementarem Chlor bei etwa 6,3 Gramm pro Liter Wasser.

Gemäß einer anderen vorteilhaften Ausführungsform wird die Menge der zugeführten Säure so gewählt, dass der pH-Wert des Reinigungsmittels bzw. der angesäuerten Hypochloritlösung mindestens 2, vorzugsweise mindestens 3 und insbesondere mindestens 4 beträgt. Andererseits kann vorgesehen sein, dass so viel Säure zugegeben wird, dass der pH-Wert des Reinigungsmittels maximal 6 und vorzugsweise maximal 5 beträgt. Im Idealfall liegt der pH-Wert der angesäuerten wässrigen Hypochloritlösung zwischen 4 und 5. Es hat sich gezeigt, dass insbesondere in einem pH-Wertebereich von 3 bis 5 neben einem großen Anteil an hypochloriger Säure und Chlorgas auch vergleichsweise viel freie Sauerstoffradikale, insbesondere in Form von Singulett-Sauerstoff entstehen. Die genannten Stoffe sind extrem starke Oxidationsmittel und führen zu einer oxidativen Intensivreinigung der filteraktiven Membranoberfläche und gegebenenfalls auch der Membranporen in sehr kurzer Zeit.

Als Säure zum Ansäuern bzw. zum Aktivieren der Hypochloritlösung kommt beispielsweise eine organische und/oder anorganische Säure zum Einsatz. Denkbar ist die Verwendung von Zitronensäure oder die Verwendung von Salzsäure. Grundsätzlich kann es sich bei der Säure auch um ein Säuregemisch handeln, das aus mehreren verschiedenen organischen und/oder anorganischen Säuren zusammengesetzt sein kann.

Als Hypochlorit wird bevorzugt Natriumhypochlorit verwendet.

Die Membran ist bevorzugt porös, also aus einem porösen Werkstoff und/oder mit einer porösen Struktur hergestellt. Gemäß einer vorteilhaften Ausführungsform kann das Reinigungsmittel als Flüssigkeitsfilm auf die poröse Membran aufgebracht werden, so dass der Flüssigkeitsfilm die jeweilige, vorzugsweise rohseitige, Oberfläche der Membran vollständig bedeckt. Alternativ ist denkbar, das Reinigungsmittel als Schaumschicht auf die Membran aufzubringen, so dass die Schaumschicht die jeweilige, vorzugsweise rohseitige, Oberfläche der Membran vollständig bedeckt. Durch diese Vorgehensweise lässt sich eine effektive chemische Reinigung der Membran erzielen, wobei gleichzeitig nur sehr wenig Reinigungsmittel verwendet werden muss. Sofern ein Flüssigkeitsfilm aufgebracht wird, ist das Reinigungsmittel eine Flüssigkeit, die letztlich aus der aktivierten wässrigen Hypochloritlösung besteht. Ist das Reinigungsmittel dagegen als Schaumschicht aufgebracht, handelt es sich um einen Schaum, der die aktivierte wässrige Hypochloritlösung und gegebenenfalls ein schaumstabilisierendes bzw. schaumbildendes Additiv aufweisen kann.

Gemäß einer anderen vorteilhaften Ausführungsform kann die Membran vor dem Aufbringen des Reinigungsmittels zumindest teilweise entwässert werden. Durch die Entwässerung der Membran ist vorzugsweise die rohseitige Oberfläche der Membran frei von Wasser bzw. zumindest weitgehend frei von Wasser. In der Folge kann das Reinigungsmittel besonders einfach direkt auf die Membranoberfläche aufgebracht werden, wodurch die Reinigungswirkung verbessert ist. Insbesondere kann eine gegebenenfalls vorhandene poröse Struktur der Membran eine gewisse Kapillarwirkung entfalten, die das Reinigungsmittel in die Tiefe bzw. in die Struktur der Membran einsaugt.

Im vorliegenden Zusammenhang ist unter "entwässerter Membran" zu verstehen, dass die Membran nicht mehr im zu filternden Wasser angeordnet ist, also an ihrer rohseitigen Oberfläche nicht mehr mit zu filterndem Wasser bedeckt ist. Die Membran muss dazu nicht getrocknet, also wasserfrei sein; vielmehr kann an bzw. in der porösen Struktur noch Feuchtigkeit, also Wasser vorhanden sein. Die wenigstens teilweise Entwässerung der jeweiligen Membran erfolgt beispielsweise dadurch, dass aus einem Filterbecken, in dem die jeweilige Membran zur Filtration von Wasser angeordnet ist, das zu filternde Wasser abgelassen wird, so dass die Membran nicht mehr von zu filterndem Wasser umgeben ist. Die Membran ist dadurch außen an ihrer Rohseite im Trockenen angeordnet bzw. Luft ausgesetzt. Zusätzlich kann gefiltertes Wasser, das sich im Inneren der jeweiligen Membran auf deren Reinseite befindet, abgelassen bzw. abgesaugt werden. Alternativ dazu kann die jeweilige Membran aus dem Filterbecken herausgenommen werden, so dass sie sich nicht mehr im Wasser, sondern im Trockenen befindet, um die gewünschte Entwässerung zu erreichen.

Gemäß einer anderen vorteilhaften Ausführungsform kann die Membran vor dem Aufbringen des Reinigungsmittels mechanisch vorgereinigt werden. Die mechanische Vorreinigung kann beispielsweise mittels einer Rückspülung oder mittels einer Beaufschlagung mit Gasbläschen oder mittels einer geeigneten Abstreifeinrichtung durchgeführt werden.

Nach dem Reinigen der Membran mit dem Reinigungsmittel kann die Membran vorzugsweise mit Wasser gespült werden, um die Verunreinigungen und das Reinigungsmittel von der Membran zu entfernen.

Ein erfindungsgemäßes flüssiges Reinigungsmittel, mit dessen Hilfe eine Membran gereinigt werden kann, die zum Filtern von Wasser dient und zum Beispiel zur Aufbereitung von Trink- und/oder Brauchwasser verwendet wird, kann durch eine wässrige Hypochloritlösung gebildet sein, die mit einer Säure aktiviert ist, derart, dass der pH-Wert der wässrigen Hypochloritlösung kleiner als 7 ist.

Gemäß einer vorteilhaften Weiterbildung dieses Reinigungsmittels können in einem Passivzustand des Reinigungsmittels, der zum Lagern und Transportieren des Reinigungsmittels dient, die Hypochloritlösung und die Säure voneinander fluidisch getrennt sein. Beispielsweise sind die Hypochloritlösung und die Säure im Passivzustand des Reinigungsmittels in separaten Behältern bzw. in separaten Kammern untergebracht. In einem Aktivzustand des Reinigungsmittels, der zum Reinigen der Membran dient, ist dagegen die Säure der Hypochloritlösung zugegeben. Die Aktivierung der Hypochloritlösung, die durch die Zugabe der Säure erfolgt, wird zweckmäßig erst unmittelbar an der Membran durchgeführt.

Die erfindungsgemäße Verwendung charakterisiert sich dadurch, dass eine wässrige Hypochloritlösung, die mit einer Säure auf einen pH-Wert von weniger als 7 aktiviert ist, als Reinigungsmittel zum Reinigen einer Membran verwendet wird, die zum Filtern von Wasser dient, zum Beispiel zur Aufbereitung von Trinkwasser und/oder Brauchwasser.

Eine erfindungsgemäße Filtrationsanlage zum Aufbereiten von Trink- und/oder Brauchwasser weist zumindest zwei Filterbecken auf, in denen jeweils mindestens eine Membran zum Filtern von Wasser angeordnet ist und die jeweils mindestens einen Zulauf für zu filterndes Wasser, wenigstens einen Ablauf für gereinigtes Wasser und wenigstens einen Leerlauf für ungefiltertes Wasser aufweisen, die jeweils über entsprechende Ventileinrichtungen steuerbar sind. Ferner ist eine Reinigungsmittelzuführung zum Zuführen eines Reinigungsmittels zu den Membranen der Filterbecken vorgesehen. Eine Steuereinrichtung der Filtrationsanlage dient zum Betreiben der Filtrationsanlage und ist hierzu mit den genannten Ventileinrichtungen sowie mit der Reinigungsmittelzuführung gekoppelt. Ferner ist die Steuereinrichtung so ausgestaltet bzw. programmiert, dass sie durch eine entsprechende Ansteuerung der Ventileinrichtungen und der Reinigungsmittelzuführung zumindest eines der Filterbecken in einem Reinigungsbetrieb zum Reinigen der wenigstens einen Membran dieses Filterbeckens betreibt, während sie gleichzeitig zumindest ein anderes der Filterbecken in einem Filtrationsbetrieb zum Filtern des Wassers betreibt. Ferner ist die Steuereinrichtung erfindungsgemäß so ausgestaltet und/oder programmiert, dass sie im Reinigungsbetrieb die Filtrationsanlage zur Durchführung des vorstehend beschriebenen Verfahrens betreibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine schaltplanartige Prinzipdarstellung einer Filtrationsanlage,
- Fig. 2: einen stark vereinfachten Querschnitt einer Membran,
- Fig. 3: ein vergrößertes Detail 111 aus Fig. 2.

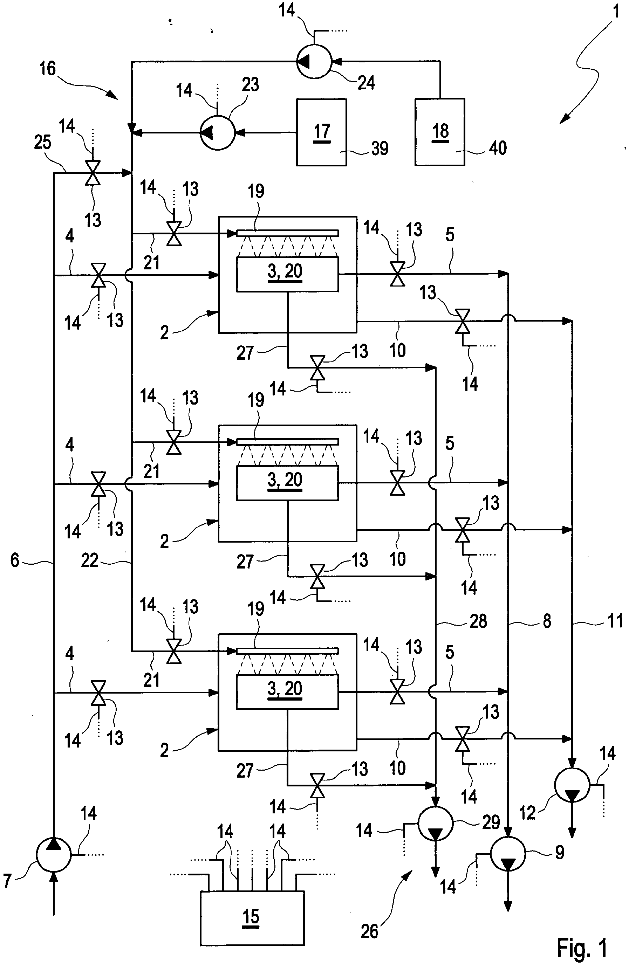

Entsprechend Fig. 1 umfasst eine Filtrationsanlage 1, die zum Aufbereiten von Trinkwasser und/oder von Brauchwasser verwendet werden kann, zumindest zwei Filterbecken 2. Im gezeigten Beispiel sind drei Filterbecken 2 vorgesehen. Es ist klar, dass auch eine Ausführungsform mit nur zwei Filterbecken 2 oder eine Ausführungsform mit mehr als drei Filterbecken 2 möglich ist. Die Filtrationsanlage 1 kann auch als Wasseraufbereitungsanlage bezeichnet werden.

In jedem Filterbecken 2 ist zumindest eine Membran 3 angeordnet, die zum Filtern von Wasser dient. Gezeigt ist zur Vereinfachung jeweils eine einzelne Membran 3. Zweckmäßig ist jedoch ein Membranblock 20 vorgesehen, der mehrere Membranen 3 umfasst. Ebenso lassen sich im jeweiligen Filterbecken 2 auch mehrere derartige Membranblöcke 20 anordnen. Das jeweilige Filterbecken 2 weist einen Zulauf 4 für zu reinigendes bzw. zu filterndes Wasser und einen Ablauf 5 für gereinigtes bzw. gefiltertes Wasser auf. Die Zuläufe 4 werden über eine gemeinsame Zulaufleitung 6 mit zu filterndem Wasser versorgt. In der Zulaufleitung 6 kann eine Pumpe 7 angeordnet sein. Die Abläufe 5 sind zu einer gemeinsamen Ablaufleitung 8 zusammengefasst, in der eine Pumpe 9 angeordnet sein kann. Eine der Pumpen 7 und 9 kann grundsätzlich entfallen, muss jedoch nicht. Ferner ist hier jedes Filterbecken 2 mit einem Leerlauf 10 ausgestattet, über den ungefiltertes Wasser aus dem Filterbecken 2 abgeführt werden kann, um das Filterbecken 2 zu entleeren. Die Leerläufe 10 sind mit einer gemeinsamen Leerlaufleitung 11 verbunden, in der ebenfalls eine Pumpe 12 angeordnet sein. Die einzelnen Zuläufe 4, die einzelnen Abläufe 5 und die Leerläufe 10 sind jeweils mit Hilfe von Ventileinrichtungen 13 steuerbar. Die Ventileinrichtungen 13 sind über entsprechende Steuerleitungen 14 mit einer Steuereinrichtung 15 gekoppelt, die zum Betreiben der Filtrationsanlage 1 vorgesehen ist. Die Steuereinrichtung 15 ist über entsprechende Steuerleitungen 14 auch mit den Pumpen 7, 9 und 12 gekoppelt. Die Steuereinrichtung 15 kann zum Betreiben der Filtrationsanlage 1 somit die Ventileinrichtungen 13 und die Pumpen 7, 9, 12 ansteuern.

Die Filtrationsanlage 1 ist außerdem mit einer Reinigungsmittelzuführung 16 ausgestattet, mit deren Hilfe ein Reinigungsmittel den Membranen 3 der Filterbecken 2 zugeführt werden kann. Zu diesem Zweck weist die Reinigungsmittelzuführung 16 rein exemplarisch zumindest einen Reinigungsmittelspeicher 17, 18 auf. Zum Beispiel sind zwei Reinigungsmittelspeicher, nämlich ein erster Reinigungsmittelspeicher 17 und ein zweiter Reinigungsmittelspeicher 18 vorgesehen, die zur Bevorratung eines vorzugsweise flüssigen Reinigungsmittels dienen. In den einzelnen Becken 2 ist jeweils eine Berieselungseinrichtung 19 oder Sprinklereinrichtung 19 oder dergleichen vorgesehen, um das jeweilige Reinigungsmittel auf eine außenliegende und somit rohseitige Oberfläche 33 der jeweiligen Membran 3 aufzubringen. Die Berieselungseinrichtungen 19 sind über entsprechende Reinigungsmittelleitungen 21 jeweils an eine Hauptleitung 22 der Reinigungsmittelzuführung 16 angeschlossen. Ferner kann die Reinigungsmittelzuführung 16 zumindest eine Pumpe aufweisen. Im Beispiel sind zwei Pumpen vorgesehen, nämlich für jeden Reinigungsmittelspeicher 17, 18 eine separate Pumpe. Die dem ersten Speicher 17 zugeordnete Pumpe ist mit 23 bezeichnet, während die dem zweiten Speicher 18 zugeordnete Pumpe mit 24 bezeichnet ist. Die einzelnen Reinigungsmittelleitungen 21 sind ebenfalls mit Hilfe von Ventileinrichtungen 13 steuerbar, die ihrerseits über Steuerleitungen 14 gesteuert werden können und hierzu mit der Steuereinrichtung 15 gekoppelt sind. Auch die Pumpen 23, 24 der Reinigungsmittelzuführung 16 sind über solche Steuerleitungen 14 mit der Steuereinrichtung 15 gekoppelt. Im Beispiel ist außerdem die Zuführleitung 6 über einen zusätzlichen Abzweig 25 an die Hauptleitung 22 der Reinigungsmittelzuführung 16 angeschlossen. Demnach können die Membranen 3 über die Berieselungseinrichtungen 19 auch mit Wasser beaufschlagt werden, beispielsweise um die Membranen 3 zu spülen. Der Abzweig 25 ist ebenfalls mit Hilfe einer Ventileinrichtung 13 steuerbar, die wieder über eine Steuerleitung 14 mit der Steuereinrichtung 15 gekoppelt ist.

Schließlich ist im Beispiel noch eine Unterdruckerzeugungseinrichtung 26 vorgesehen, mit deren Hilfe die einzelnen Membranen 3 an ihrer Reinseite mit einem Unterdruck beaufschlagt werden können. Hierzu sind entsprechende Saugleitungen 27 auf geeignete Weise an die Membranen 3 angeschlossen und mit einer Saughauptleitung 28 verbunden, in der eine Saugpumpe 29 angeordnet ist. Die einzelnen Saugleitungen 27 sind wieder über Ventileinrichtungen 13 steuerbar, die über entsprechende Steuerleitungen 14 mit der Steuereinrichtung 15 gekoppelt sind. Auch die Saugpumpe 29 ist über eine Steuerleitung 14 mit der Steuereinrichtung 15 gekoppelt.

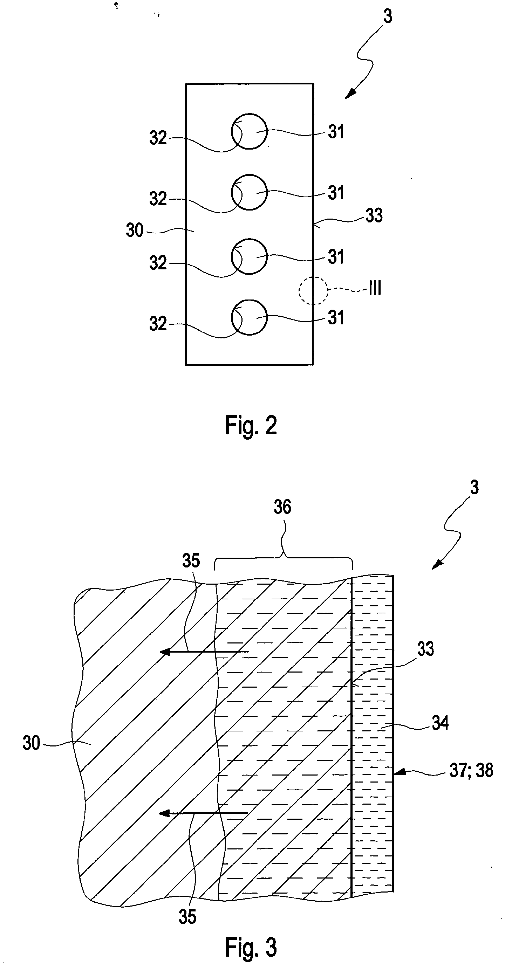

Gemäß Fig. 2 kann eine derartige Membran 3 einen Membrankörper 30 aufweisen, der eine poröse Struktur besitzt. Im Beispiel der Fig. 2 enthält die Membran 2 im Membrankörper 30 mehrere reinseitige Kanäle 31, in denen sich gefiltertes Wasser sammelt und über die das gefilterte Wasser aus der jeweiligen Membran 3 herausgeführt werden kann. Die einzelnen Kanäle 31 sind dann von einer innenliegenden, reinseitigen Oberfläche 32 der Membran 3 begrenzt. An ihrer Außenseite besitzt die Membran 3 dagegen die zuvor schon genannte rohseitige Oberfläche 33, die im Betrieb der Membran 3 dem zu filternden Wasser ausgesetzt ist. Beispielsweise ist der Membrankörper 30 auf einer keramischen Basis aufgebaut, so dass es sich bei der Membran 3 um eine Keramikmembran handelt.

In Fig. 3 ist ein Detail III aus Fig. 2 vergrößert dargestellt. Erkennbar ist wieder die außenliegende, rohseitige Oberfläche 33 der Membran 3 bzw. des Membrankörpers 30. Wiedergegeben ist dabei die Membran 3 während einer Reinigung mit Hilfe eines Reinigungsmittels 34, das auf die Oberfläche 33 aufgebracht ist. Durch die poröse Struktur des Membrankörpers 30 saugt die Membran 3 das Reinigungsmittel 34 an der Oberfläche 33 an. Dabei wird das Reinigungsmittel 34 durch Kapillarkräfte 35 angetrieben, die in Fig. 3 durch Pfeile angedeutet sind. Im Wesentlichen saugen die Kapillarkräfte 35 das Reinigungsmittel 34 an der außenliegenden Oberfläche 33 an und transportieren es in das Innere des Membrankörpers 30. In Fig. 3 ist ein Bereich 36 des Membrankörpers 30 angedeutet, in den das Reinigungsmittel 34 bereits eingezogen ist.

Gemäß Fig. 1 ist die Steuereinrichtung 15 zunächst so ausgestaltet bzw. programmiert, dass sie die Filtrationsanlage 1 zur Erzeugung eines kontinuierlichen Volumenstroms an gefiltertem Wasser ansteuert. Da sich bei der Filtration die Membranen 3 allmählich zusetzen, ist zyklisch eine Regeneration bzw. Reinigung der Membranen 3 erforderlich. Die Reinigung der Membranen 3 erfolgt dabei während des Betriebs der Filtrationsanlage 1, derart, dass die Produktion von gefiltertem Wasser nicht unterbrochen wird. Hierzu kann die Steuereinrichtung 15 zumindest eines der Filterbecken 2 durch eine entsprechende Ansteuerung der Ventileinrichtungen 13 in einem Reinigungsbetrieb betreiben, während sie gleichzeitig alle übrigen Filterbecken 2 in einem Filtrationsbetrieb betreibt. Die Produktion von gefiltertem Wasser erfolgt in den Filterbecken 2, die im Filtrationsbetrieb betrieben werden. Bei dem Filterbecken 2, das im Reinigungsbetrieb betrieben wird, erfolgt dagegen eine Reinigung der jeweiligen Membran 3. Die Steuereinrichtung 15 führt während des Reinigungsbetriebs des jeweiligen Filterbeckens 2 das nachfolgend beschriebene Verfahren zum Reinigen der jeweiligen Membran 3 durch.

Zunächst wird das Filterbecken 2, dessen Membran 3 gereinigt werden soll, vom Filterbetrieb in den Reinigungsbetrieb umgeschaltet. Hierzu wird das Filterbecken 2 über den zugehörigen Leerlauf 10 entleert, zumindest so weit, dass die jeweilige Membran 3 zumindest teilweise entwässert wird.

Durch eine entsprechende Ansteuerung der Ventileinrichtungen 13 und der Pumpen 23, 24 wird ein oxidativ wirkendes Reinigungsmittel 34 auf die außenliegende bzw. rohseitige Oberfläche 33 der jeweiligen Membran 3 aufgebracht. Das Reinigungsmittel ist dabei eine wässrige Hypochloritlösung, die mit einer Säure aktiviert ist, und zwar derart, dass der pH-Wert der wässrigen Hypochloritlösung anschließend kleiner als 7 ist. Bevorzugt wird zuerst die noch nicht angesäuerte Hypochloritlösung auf die Oberfläche 33 der Membran 3 aufgebracht und erst anschließend durch Zugabe der Säure durch Ansäuerung aktiviert. Hierzu weist die Reinigungsmittelzuführung 16 im Beispiel der Fig. 1 zwei separate Reinigungsmittelspeicher 17, 18 auf. In dem ersten Reinigungsmittelspeicher 17 ist die noch ungesäuerte wässrige Hypochloritlösung 39 gespeichert. Im zweiten Reinigungsmittelspeicher 18 ist dagegen die Säure 40 zum Ansäuern der Hypochloritlösung gespeichert. Somit kann durch eine entsprechende Betätigung der ersten Pumpe 23 die jeweilige Membran 3 zunächst nur mit der wässrigen Hypochloritlösung 39 beaufschlagt werden. Anschließend wird durch eine entsprechende Ansteuerung der zweiten Pumpe 24 die Säure 40 zugegen, ebenfalls über die Berieselungseinrichtung 19. Es ist klar, dass bei einer anderen Ausführungsform auch separate Berieselungseinrichtungen 19 für die Hypochloritlösung 39 einerseits und die Säure 40 andererseits vorgesehen sein können.

Beim hier gezeigten Beispiel wird für das Reinigungsmittel 34 somit ein Passivzustand für die Lagerung des Reinigungsmittels 34 realisiert, bei dem die Hypochloritlösung 39 und die Säure 40 voneinander fluidisch getrennt sind. Der Aktivzustand des Reinigungsmittels 34 wird dann zweckmäßig erst unmittelbar an der Membran 3 erzeugt. Insoweit handelt es sich in diesem Beispiel um ein ZweiKomponenten-Reinigungsmittel 34 das erst durch das Zusammenfügen der beiden Komponenten aktiviert wird.

Das Aufbringen des Reinigungsmittels 34 auf die Oberfläche 33 der Membran 3 kann gemäß Fig. 3 so erfolgen, dass sich an der Oberfläche 33 ein Flüssigkeitsfilm 37 ausbildet, der im Wesentlichen die gesamte rohseitige Oberfläche 33 der Membran 3 abdeckt. Alternativ ist ebenso denkbar, das Reinigungsmittel 34 als Schaumschicht 38 auf die Membran 3 aufzubringen. Wichtig ist dabei, dass im Reinigungsmittel 34 einerseits eine möglichst geringe Viskosität vorliegt, um die kapillare Ansaugung in die Struktur des Membrankörpers 30 zu vereinfachen. Andererseits darf die Viskosität nicht zu klein sein, damit das Reinigungsmittel 34 ausreichend lange an der Oberfläche 33 haften bleibt. Durch die Verwendung einer Schaumschicht 38 wird ein schwerkraftbedingtes Abfließen des Reinigungsmittels 34 von der Oberfläche 33 behindert bzw. vermieden, während gleichzeitig ein effizientes Aufsaugen durch die Kapillarkräfte 35 realisiert werden kann.

Damit das an der Außenseite aufgebrachte Reinigungsmittel 34 besser in die Struktur des Membrankörpers 30 eindringen kann, kann es zweckmäßig sein, über die Unterdruckerzeugungseinrichtung 26 und über die entsprechende Saugleitung 27 im Inneren der jeweiligen Membran 3 einen Unterdruck anzulegen.

Beispielsweise wird in den innenliegenden Kanälen 31 ein Unterdruck erzeugt, der eine ansaugende Wirkung für das außenliegende Reinigungsmittel 34 erzeugt.

Der pH-Wert der mit Hilfe der Säure 40 angesäuerten wässrigen Hypochloritlösung 39 liegt vorzugsweise zwischen 4 und 5. Die Hypochloritlösung 39 liegt zweckmäßig in einer ungesättigten Konzentration vor, die gegenüber einer gesättigten Konzentration um weniger als das Hundertfache, vorzugsweise um weniger als das Fünfzigfache verdünnt ist. Insbesondere ist die Hypochloritlösung 39 um weniger als das Fünfundzwanzigfache, vorzugsweise um etwa das Zwanzigfache gegenüber der gesättigten Konzentration verdünnt. Ferner ist vorgesehen, dass nur so viel Säure 40 der Hypochloritlösung 39 zu deren Aktivierung hinzugefügt wird, dass sie anschließend maximal 7 Gramm Chlor, vorzugsweise maximal 6,5 Gramm Chlor pro Liter Wasser enthält. Ferner wird mindestens so viel Säure 40 hinzugegeben, dass mindestens 1 Gramm Chlor, vorzugsweise mindestens 3 Gramm Chlor und insbesondere mindestens 5 Gramm Chlor, pro Liter Wasser in der Hypochloritlösung 39 enthalten sind. Erreicht werden diese Anteile an Chlor im Wasser insbesondere durch die vorgenannten pH-Werte.

Sobald die chemische Reinigung mit Hilfe des oxidativen Reinigungsmittels 34 abgeschlossen ist, wird die Membran 3 mit Wasser gespült. Diese Spülung kann wieder über die Berieselungseinrichtung 19 erfolgen. Hierzu wird der Membran 3 über die jeweilige Berieselungseinrichtung 19 Wasser über den Abzweig 25 der Zuleitung 6 zugeführt. Das Spülwasser kann mit sämtlichen Verunreinigungen durch den Leerlauf 10 abgeführt werden. Anschließend kann das Filterbecken 2 wieder mit zu filterndem Wasser befüllt werden und steht zur Produktion von gefiltertem Wasser zur Verfügung. Die Steuereinrichtung 15 kann dementsprechend dieses Filterbecken 2 in den Filterbetrieb umschalten und danach ein anderes Filterbecken 2 in den Reinigungsbetrieb schalten.

## Patentansprüche

1. Verfahren zum Reinigen einer Membran (3), die zum Filtern von Wasser dient, zum Beispiel zur Aufbereitung von Trink- und/oder Brauchwasser,
- bei dem ein Reinigungsmittel (34) auf eine Oberfläche (33) der Membran (3) aufgebracht wird,
- wobei das Reinigungsmittel (34) eine wässrige Hypochloritlösung (39) aufweist, die mit einer Säure (40) aktiviert ist, derart, dass ihr pH-Wert kleiner 7 ist.

2. Verfahren nach Anspruch 1,
**dadurch gekennzeichnet,**
**dass** die Aktivierung der Hypochloritlösung (39) mit der Säure (40) erst an der Membran (3) erfolgt.

3. Verfahren nach Anspruch 1 oder 2,
**dadurch gekennzeichnet,**
**dass** die Hypochloritlösung (39) ungesättigt ist.

4. Verfahren nach einem der Ansprüche 1 bis 3,
**dadurch gekennzeichnet,**
- **dass** die aktivierte Hypochloritlösung (39) mindestens 1 Gramm, vorzugsweise mindestens 3 Gramm, insbesondere mindestens 5 Gramm, Chlor pro Liter Wasser aufweist, und/oder
- **dass** die aktivierte Hypochloritlösung (39) maximal 7 Gramm, vorzugsweise maximal 6,5 Gramm, elementares Chlor pro Liter Wasser aufweist.

5. Verfahren nach einem der Ansprüche 1 bis 4,
**dadurch gekennzeichnet,**
- **dass** der Hypochloritlösung (39) so viel Säure (40) zugegeben wird, dass der pH-Wert des Reinigungsmittels (34) mindestens 2, vorzugsweise mindestens 3, insbesondere mindestens 4, beträgt, und/oder
- **dass** der Hypochloritlösung (39) so viel Säure (40) zugegeben wird, dass der pH-Wert des Reinigungsmittels (34) maximal 6, vorzugsweise maximal 5, beträgt.

6. Verfahren nach einem der Ansprüche 1 bis 5,
**dadurch gekennzeichnet,**
**dass** als Säure (40) wenigstens eine organische und/oder anorganische Säure verwendet wird.

7. Verfahren nach einem der Ansprüche 1 bis 6,
**dadurch gekennzeichnet,**
**dass** als Hypochlorit Natriumhypochlorit verwendet wird.

8. Verfahren nach einem der Ansprüche 1 bis 7,
**dadurch gekennzeichnet,**
- **dass** das Reinigungsmittel (34) als Flüssigkeitsfilm (37) auf die Membran (3) aufgebracht wird, oder
- **dass** das Reinigungsmittel (34) als Schaumschicht (38) auf die Membran (3) aufgebracht wird.

9. Verfahren nach einem der Ansprüche 1 bis 8,
**dadurch gekennzeichnet,**
**dass** die Membran (3) vor dem Aufbringen des Reinigungsmittels (34) zumindest teilweise entwässert wird.

10. Verfahren nach einem der Ansprüche 1 bis 9,
**dadurch gekennzeichnet,**
- **dass** die Membran (3) vor dem Aufbringen des Reinigungsmittels (34) mechanisch vorgereinigt wird, und/oder
- **dass** die Membran (3) nach dem Reinigen mit dem Reinigungsmittel (34) mit Wasser gespült wird.

11. Flüssiges Reinigungsmittel zum Reinigen einer Membran (3), die zum Filtern von Wasser dient, zum Beispiel zur Aufbereitung von Trink- und/oder Brauchwasser, wobei das Reinigungsmittel (34) eine wässrige Hypochloritlösung (39) ist, die mit einer Säure (40) aktiviert ist, so dass ihr pH-Wert kleiner als 7 ist.

12. Verfahren nach Anspruch 11,
**dadurch gekennzeichnet,**
- **dass** in einem Passivzustand des Reinigungsmittels (34) zum Lagern und Transportieren des Reinigungsmittels (34) die Hypochloritlösung (39) und die Säure (40) voneinander fluidisch getrennt sind,
- **dass** in einem Aktivzustand des Reinigungsmittels (34) zum Reinigen der Membran (3) die Säure (40) der Hypochloritlösung (39) zugegeben ist.

13. Verwendung einer wässrigen Hypochloritlösung (39), die mit einer Säure (40) auf einen pH-Wert von weniger als 7 aktiviert ist, als Reinigungsmittel (34) zum Reinigen einer Membran (3), die zum Filtern von Wasser dient, zum Beispiel zur Aufbereitung von Trinkwasser und/oder Brauchwasser.

14. Filtrationsanlage zum Aufbereiten von Trink- und/oder Brauchwasser,
- mit mindestens zwei Filterbecken (2), in denen jeweils mindestens eine Membran (3) zum Filtern von Wasser angeordnet ist und die jeweils mindestens einen Zulauf (4) für zu filterndes Wasser, wenigstens einen Ablauf (5) für gefiltertes Wasser und wenigstens einen Leerlauf (10) für ungefiltertes Wasser aufweist,
- mit einer Reinigungsmittelzuführung (16) zum Zuführen eines Reinigungsmittels (34) zu den Membranen (3) der Filterbecken (2),
- mit einer Steuereinrichtung (15) zum Betreiben der Filtrationsanlage (1), die mit Ventileinrichtungen (13) zum Steuern der Zuläufe (4), der Abläufe (5) und der Leerläufe (10) sowie mit der Reinigungsmittelzuführung (16) gekoppelt ist und die so ausgestaltet und/oder programmiert ist, dass sie durch entsprechende Ansteuerung der Ventileinrichtungen (13) und der Reinigungsmittelzuführung (16) zumindest eines der Filterbecken (2) in einem Reinigungsbetrieb zum Reinigen der wenigstens einen Membran (3) dieses Filterbeckens (2) betreibt, während sie gleichzeitig zumindest ein anderes der Filterbecken (2) in einem Filtrationsbetrieb zum Filtern des Wassers betreibt,
- wobei die Steuereinrichtung (15) außerdem so ausgestaltet und/oder programmiert ist, dass sie im Reinigungsbetrieb des jeweiligen Filterbeckens (2) die Filtrationsanlage (1) zur Durchführung des Verfahrens nach einem der Ansprüche 1 bis 10 betreibt.
